# EUROPÄISCHE PATENTSCHRIFT

(11) **EP 2 677 603 B1**
(45) Veröffentlichungstag und Bekanntmachung des Hinweises auf die Patenterteilung: **20.05.2015**
(21) Anmeldenummer: 12006847.3
(22) Anmeldetag: 02.10.2012
(51) Int. Cl.: H01R 4/50, A01K 3/00, E04H 17/04

(54) **Seil- und Litzenverbinder für elektrische Weidezäune**
Rope and strand connector for electric pasture fences
Connecteur de cordes et de tresses pour clôtures électriques

(30) Priorität: 21.06.2012 DE 202012006034 U
(43) Veröffentlichungstag der Anmeldung: 25.12.2013
(73) Patentinhaber: Beichert, Alexander, 79692 Kleines Wiesental (DE)
(72) Erfinder: Beichert, Alexander, 79692 Kleines Wiesental (DE)
(74) Vertreter: Seidler, Sebastian

(56) Entgegenhaltungen:
- DE-B3-102010 012 249
- JP-Y- S4 932 139
- US-A- 4 160 871

## Beschreibung

Die Erfindung betrifft einen Seil- oder Litzenverbinder für elektrische Weidenzäune. Diese Verbinder werden insbesondere dort verwendet, wo die Seile oder Litzen der Weidezäune durch die weidenden Tiere gewaltsam zerrissen werden. In diesem Fall sollten die abgerissenen Enden der Seile oder Litzen schnell miteinander verbindbar sein, damit das Loch im Zaun wieder geschlossen wird. Hierbei kommt es darauf an, dass die Enden so zusammen gefügt werden, dass nicht nur die elektrische Verbindung der Endstücke gewährleistet wird, sondern auch die Gesamtlänge der Seile oder Litzen möglichst erhalten bleibt.

Um dies zu erreichen, sind aus der DE 10 2010 012 249 B3 Verbinder bekannt, welche aus zwei zusammenfügbaren Halbschalen aus hartelastischem Material bestehen, welche entlang der einen Längskante über sogenannte Filmscharniere schwenkbar miteinander verbunden und an der gegenüberliegenden Kante nach dem Zusammenklappen der Halbschalen mittels Rasthaken fixierbar sind. Diese Halbschalen weisen Rinnen zum Einspannen der abgerissenen Enden der Litze oder Seile auf, wobei an der Rinne der einen Halbschale querab zur Rinnenachse zwei Bügel mit ihren beiden Bügelenden schwenkbar an geformt sind.

Zum Verbinden der abgerissenen Litzenenden werden diese von der Mitte der Rinne aus in die vorzugsweise V-förmig zusammen laufenden und mit einer dem Litzendurchmesser entsprechenden, schlüssellochartigen Rand abschließenden Bügel bis an die Stirnseite der Halbschale nach außen durchgeführt und die Bügel zusammen mit den Litzen nach außen herunter geklappt und in dieser Lage fixiert. Nun wird die obere Halbschale heruntergeschwenkt und mittels der Rasthaken mit der unteren Halbschale so verbunden, dass die Litzenenden fest eingeklemmt sind.

Dieser bekannte Verbinder löst zwar hervorragend die an ihn gestellte Verbindungsaufgabe, jedoch ist die Herstellung des Verbinders sehr kostspielig, zumal zur Gewährleistung des Stromkontakts zwischen den beiden Litzenenden in die eine Rinne noch eine Metallplatte eingelegt werden muss. Auch ist die Bedienung des Clips durch das Einfädeln der Litzen und das Umklappen und Fixieren der Klemmbügel sowie das anschließende Verbinden der zusammengeführten Halbschalen umständlich und erfordert in der Handhabung viel Geschick.

Ausgehend von diesem Stand der Technik ist es Aufgabe der Erfindung, einen in der Verbindungsfunktion gleichwertigen Verbindungsclip schaffen, welcher sich wesentlich billiger herstellen lässt und außerdem auch leichter zu bedienen ist.

Zur Lösung dieser Aufgabe wird ein Verbinder vorgeschlagen, welcher aus einer Strom leitenden Platte mit an ihren Randbereichen ausgeformten, dem Querschnitt der Seile oder Litzen angepasste Aussparungen besteht und auf den Platten vor den Aussparungen angeordnete Kappen aufweist, welche mit ihren dem Querschnitt der Platten angepassten, Durchgangsöffnungen auf der Strom leitenden Platte über die Aussparungen verschiebbar sind, wobei der lichte Abstand der Innenwände an den einander zugekehrten Enden der Kappen der Dicke der Strom leitenden Platte entspricht und die Innenwände bis zu den voneinander weg gerichteten Enden der Kappen trichterförmig soweit auseinander verlaufen, dass die Kappen nach dem Einführen der Litzenenden in die Aussparungen von einander weg nach außen verschiebbar sind, wobei die Enden der Seile oder Litzen von den Innenwänden der Kappen umgeknickt und eingeklemmt werden.

Aus dem Dokument US 4 160 871 A ist bereits eine Verbindungsvorrichtung für ein- oder mehradrige elektrische Leitungen bzw. Kabel bekannt, bestehend aus einem Verbindungselement mit mindestens zwei Bohrungen, in die von der Isolierung befreite Kabelenden zickzackartig eingehakt werden, und aus mindestens eine aus elektrisch isolierendem Material bestehende Hülse, die auf das Verbindungselement zur Abdeckung der freien Kabelenden auf geklemmt wird. Das Verbindungselement ist hierbei als eine elektrisch leitende Zunge ausgebildet, die zur Hälfte in je eine Isolierhülse eingeführt wird, welche die Verbindungsstelle - frontal gegeneinander liegend - umhüllen.

Die Isolierhülsen weisen zu diesem Zweck je eine Durchgangsbohrung auf, mittels welcher die Hülsen bei den zu verbindenden Kabelenden vorher über deren Isoliermantel geschoben werden. Sodann werden die freigelegten blanken Kabelenden zickzackartig durch die Bohrungen an beiden Enden des Verbindungselements durchgeführt und dort eingehängt. Danach werden die Isolierhülsen über die blanken Kabelenden auf einander zu verschoben, bis diese frontal gegeneinander liegend die Verbindungsstelle umhüllen. Anschließend werden die Hülsenwände zur Abdeckung der freien Kabelenden auf geklemmt.

Abgesehen davon, dass diese bekannten Verbinder nicht für die Reparatur von elektrischen Weidezäune bestimmt und verwendbar sind, unterscheiden sich die erfindungsgemäßen Verbinder hiervon im wesentlichen dadurch, dass die Kappen in ihrer vormontierten Ausgangsstellung auf den Platten vor den Aussparungen angeordnet sind, um dann - nach Einfädeln der elektrisch leitenden Litzenenden in die Aussparungen der Platten - über die rückwärts umgeknickten Enden der Litzen von einander weg nach außen verschoben zu werden.

Hierbei muss bei der Ausbildung der Aussparungen lediglich darauf geachtet werden, dass diese dem Querschnitt der Seile oder Litzen angepasst sind.

Bei der Verbindung von runden Seilen ist es nach einem weiteren Merkmal der Erfindung zweckmäßig, wenn die Aussparungen Schlüsselloch-förmig ausgebildet sind und zwar derart, dass deren schmalere Bereiche voneinander weggerichtet und in ihrer Breite dem Durchmesser der Seile oder Litzen angepasst sind. Die Enden der Seile oder Litzen lassen sich hierbei leicht in den breiteren Bereich einführen und dann in den schmaleren Bereich durchziehen.

Bei der Schlüsselloch-förmigen Ausbildung der Aussparung ist weiterhin zweckmäßig, wenn die Ränder am Übergang von den breiteren zu den schmaleren Bereichen der Schlüssellöcher einen Engpass bilden, dessen lichter Abstand geringfügig kleiner ist als der Durchmesser der Seile. Das hat den Vorteil, dass das einmal durchgezogene Ende nicht wieder zurückgleiten kann, bis die Kappe über das Seilende übergeschoben wird.

In weitere Ausgestaltung der Erfindung ist es auch zweckmäßig, wenn die Außenkante am Ende des schmaleren Bereichs derart bogenförmig ausgebildet ist, dass die Fasern des Seils beim Umknicken aufgefächert werden und so mehr Metallfäden mit dem Rand der Aussparung in Berührung kommen

Diese und weitere Merkmale der Erfindung und deren Vorteile ergeben sich aus in der Zeichnung dargestellten bevorzugten Ausführungsbeispielen, welche nachfolgend näher erläutert werden. Es zeigen
- Figur 1: Einen Litzenverbinder in perspektivischer Darstellung für runde Seile mit Kappen in Öffnungsstellung beim Einführen der Seilenden,
- Figur 2: Den gleichen Verbinder mit den Kappen in Schließstellung,
- Figur 3: Eine Kappe in Vorderansicht mit Blick auf die Durchgangsöffnung für eine Strom leitende Metallplatte,
- Figur 4: Die gleiche Kappe im Längsschnitt durch die Gleit- und Klemmwände,
- Figur 5: Eine längliche Metallplatte mit zwei Schlüssellöchern in Draufsicht,
- Figur 6: Die gleiche längliche Metallplatte im Längsschnitt mit zwei verschiebbaren Kappen, auf der linken Seite in Ausgangsstellung vor dem Schlüsselloch und auf der rechten Seite in Klemmstellung über dem Schlüsselloch,
- Figur 7: Einen Verbinder mit in T-förmiger Metallplatte und drei Kappen in Ausgangsstellung,
- Figur 8: Den gleichen Verbinder nach Verschieben der Kappen in die Klemmstellung,
- Figur 9: Einen Verbinder mit kreuzförmiger Metallplatte und vier Kappen in Ausgangsstellung,
- Figur 10: Den gleichen Verbinder nach Verschieben der Kappen in Klemmstellung,
- Figur 11: Einen Verbinder in perspektivischer Darstellung für flache Litzen oder Bänder mit den Kappen in Öffnungsstellung und
- Figur 12: Den gleichen Verbinder mit den Kappen in Klemmstellung

Die in den Figuren dargestellten Seil- oder Litzenverbinder dienen in erster Linie zum Ausbessern von elektrischen Weidezäunen, bei denen die Seile 1 oder Litzen 16 beispielsweise durch ruckartige Bewegungen der eingezäunten Tiere oder durch sonstige Beanspruchungen schon mal reißen können. Die Verbinder lassen sich aber auch generell zum Zusammenfügen der Enden von Seilen 1 oder Litzen 16 verwenden.

Die Verbinder bestehen im wesentlichen aus einer Strom leitenden Platte 2 mit an gegenüber liegenden Randbereichen ausgeformten Aussparungen 3 bzw. 4 sowie auf den Platten vor den Aussparungen angeordneten Kappen 5, welche mit ihren dem Querschnitt der Platten 2 angepassten, rechteckigen Durchgangsöffnungen 6 auf der Strom leitenden Platte 2 über die Aussparungen verschiebbar sind. Das Ausformen der Aussparungen 3 bzw. 4 kann hierbei durch Stanzen, Fräsen oder auch Lasern erfolgen.

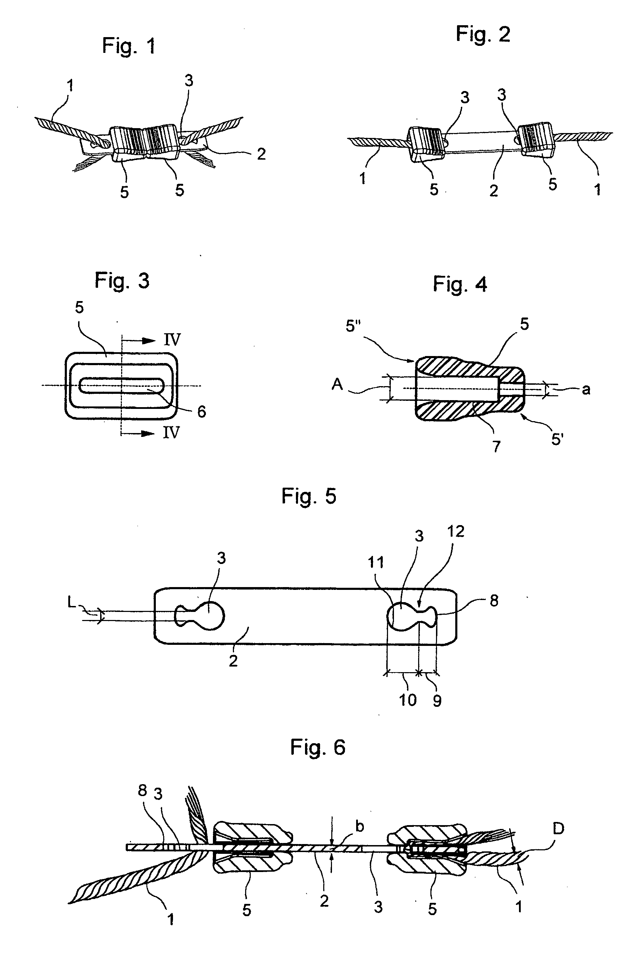

Der lichte Abstand "a" der Innenwände 7 an den einander zugekehrten Enden 5' der Kappen 5 entspricht hierbei der Dicke "b" der Platten 2, so dass ein geführtes Gleiten der Kappen 5 auf der Platte 2 ermöglicht wird. Die Innenwände 7 verlaufen bis zu den entgegengesetzten Enden 5" der Kappen 5 soweit auseinander, dass diese Wände 7 über die in die Aussparungen 3 bzw. 4 eingeführten Enden der Seile oder Litzen 1 bzw. 16 verschiebbar sind, nachdem diese Enden an den Außenkanten 8 der Aussparungen 3 bzw. 4 umgeknickt sind (siehe rechte Seite von Figur 6).

Nach einer vorteilhaften Weiterbildung der Erfindung verlaufen die Kappen 5 mit ihren über die Platte 2 verschiebbaren Innenwänden 7 der zu den voneinander weg gerichteten Enden 5" hin zunächst über eine kurze Strecke in einem Abstand "A" parallel zueinander, welcher der Dicke "b" der Platte 2 plus der doppelten Dicke "D" der Seile oder Litzen 1 angepasst ist, bevor die Innenwände 7 trichterförmig auseinander streben.

Der in den Figuren 1 bis 6 dargestellte Verbinder dient zur Verbindung von runden Seilen 1. Bei diesem Verbinder sind die Aussparungen 3 Schlüsselloch-förmig ausgebildet, und zwar derart, dass deren schmalere Bereiche 9 voneinander weggerichtet und in ihrer Breite der Dicke "D" der Seile 1 angepasst sind. Hierbei bilden die Seitenränder 11 der Aussparungen 3 am Übergang von den breiteren Bereichen 10 zu den schmaleren Bereichen 9 einen Engpass 12, dessen lichter Abstand "I" geringfügig kleiner ist, als die Dicke "D" der Seile 1 (Figur 5).

Außerdem ist bei diesem Schlüsselloch 3 die Außenkante 8 am Ende des schmaleren Bereichs 9 zweckmäßigerweise derart bogenförmig ausgebildet, dass die Metallfasern der runden Seile 1 beim Umknicken aufgefächert werden und dadurch auf einer größeren Breite anliegen.

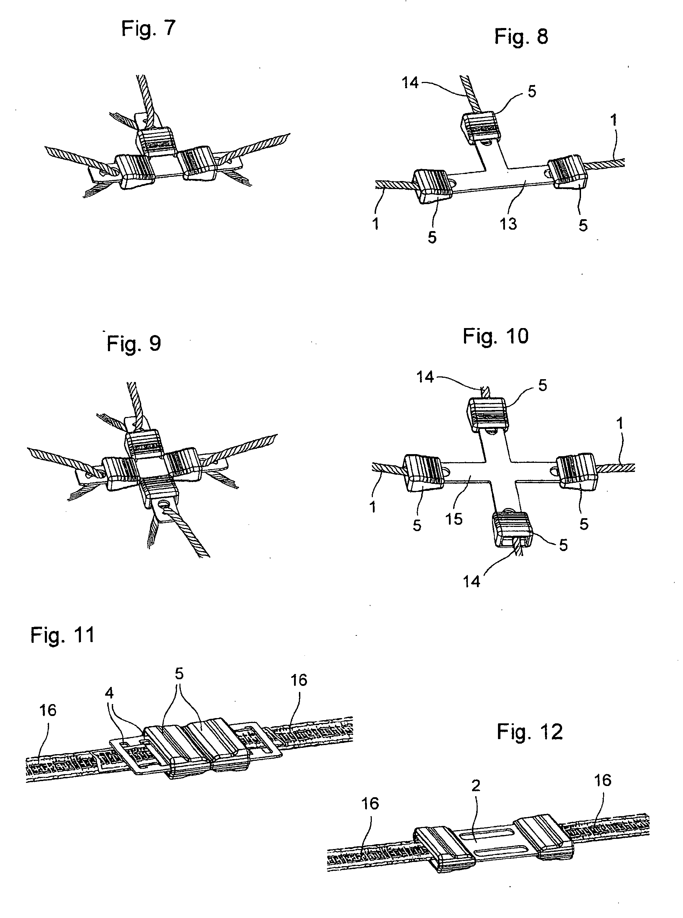

In den Figuren 7 bis 10 sind verschiedene Ausführungsbeispiele des Verbinders dargestellt, die je nach ihrem Verwendungszweck eingesetzt werden können.

Bei dem Ausführungsbeispiel nach Figur 7 und 8 handelt es sich um einen Verbinder mit T-förmiger Metallplatte 13 und drei auf diesen verschiebbaren Kappen 5, einmal in Öffnungsstellung (Figur 7) und einmal in Klemmstellung (Figur 8). Diese Ausführungsform ermöglicht eine elektrische Verbindung von zwei Längsseilen 1 und einem quer dazu ausgerichteten Seil 14.

Bei dem Ausführungsbeispiel nach Figur 9 und 10 handelt es sich um einen Verbinder mit kreuzförmiger Metallplatte 15 und vier auf diesen verschiebbaren Kappen 5, einmal in Öffnungsstellung (Figur 9) und einmal in Klemmstellung (Figur 10). Diese Ausführungsformen ermöglichen die elektrische Verbindung von mehreren Längsseilen 1 mit mehreren Quer Seilen 14.

Eine weitere vorteilhafte Ausführungsform der Erfindung ist in den Figuren 11 und 12 dargestellt. Diese Verbinder ermöglichen die Reparatur von flachen Litzen oder Bändern 16, welche beispielsweise auf Pferde Koppeln verwendet werden. Hierbei sind die Aussparungen 4 in den Metallplatten 17 schlitzförmig ausgebildet und in Länge und Breite dem Querschnitt der flachen Litzen oder Bänder 16 angepasst.

Bei der bevorzugten Ausführungsform der Verbinder nach Figur 11 und 12 sind an beiden Enden der Platten 2 parallel zu den schlitzförmigen Aussparungen 4 jeweils noch eine weitere Aussparung 4 ein geformt. Damit besteht die Möglichkeit, die Enden der Bänder durch die hintere Aussparung hin- und durch die Rand nahe Aussparung wieder zurück zu führen und dadurch die Verbindung nach en Verschiebung der Kappe über die Aussparungen noch sicherer zu machen.

Es versteht sich, dass die erfindungsgemäße Verbindungsart zum Verbinden mit nur einem Ende einer Metallplatte 2 eingesetzt werden kann, wenn das andere Ende der Platte 2 beispielsweise zum Schließen des Weidezauntors mittels eines runden Loches in einen am Torpfosten befestigten Haken - gegebenenfalls unter Zwischenschaltung eines sogenannten Torschlosses - eingehängt werden soll.

### Bezugszeichenliste:

Pos.-Nr. Bezeichnung:
- 1: Seile
- 2: Stromleitende Platte
- 3: Aussparungen (Schlüsselloch-förmig)
- 4: Aussparungen (Schlitzförmig)
- 5: Kappen
- 6: Durchgangsöffnungen
- 7: Innenwände
- 8: Außenkanten
- 9: Schmaler Bereich des Schlüssellochs
- 10: Breiter Bereich des Schlüssellochs
- 11: Seitenränder
- 12: Engpass
- 13: T-förmige Metallplatte
- 14: Quer Seil
- 15: Kreuzförmige Metallplatte
- 16: Flache Litzen oder Bänder

## Patentansprüche

1. Seil- oder Litzenverbinder für elektrische Weidezäune, umfassend eine Strom leitende Platte (2) mit an ihren Randbereichen ausgeformten, dem Querschnitt der Seile (1) oder Litzen (16) angepassten Aussparungen (3/4) und auf den Platten (2) vor den Aussparungen (3/4) angeordneten Kappen (5), welche mit ihren dem Querschnitt der Platten (2) angepassten Durchgangsöffnungen (6) auf der Strom leitenden Platte (2) über die Aussparungen (3/4) verschiebbar sind, wobei der lichte Abstand (A) der Innenwände (7) an den einander zugekehrten Enden (5') der Kappen (5) der Dicke (b) der Strom leitenden Platte (2) entspricht und die Innenwände (7) bis zu den voneinander weg gerichteten Enden (5") der Kappen (5) trichterförmig soweit auseinander verlaufen, dass die Kappen (5) nach dem Einführen der Litzenenden in die Aussparungen (3/4) von einander weg nach außen verschiebbar sind, wobei die Enden der Seile 1 oder Litzen 16 von den Innenwänden (7) der Kappen (5) umgeknickt und eingeklemmt werden.

2. Seil- oder Litzenverbinder nach Anspruch 1, insbesondere zur Verbindung von runden Seilen (1), **dadurch gekennzeichnet, dass** die Aussparungen (3) Schlüsselloch-förmig ausgebildet sind, wobei deren schmalere Bereiche (9) voneinander weggerichtet und in ihrer Breite der Dicke (D) der Seile (1) angepasst sind.

3. Seil- oder Litzenverbinder nach Anspruch 2, **dadurch gekennzeichnet, dass** die Seitenränder (11) der Schlüssellöcher (3) am Übergang von den breiteren Bereichen (10) zu den schmaleren Bereichen (9) einen Engpass (12) bilden, dessen lichter Abstand (I) geringfügig kleiner ist als die Dicke (D) der Seile (1).

4. Seil- oder Litzenverbinder nach Anspruch 2 oder 3, **dadurch gekennzeichnet, dass** die Außenkante (8) am Ende des schmaleren Bereichs (9) derart bogenförmig ausgebildet ist, dass die Fasern der Seile (1) beim Umknicken aufgefächert werden.

5. Seil- oder Litzenverbinder nach Anspruch 1, insbesondere zur Verbindung von flachen Litzen oder Bändern (16), **dadurch gekennzeichnet, dass** die Aussparungen (4) in Länge und Breite dem Querschnitt der Litzen oder Bänder (16) angepasst sind.

6. Seil- oder Litzenverbinder nach einen der Ansprüche 1 bis 5, **dadurch gekennzeichnet, dass** die Kappen (5) mit ihren über der Strom leitenden Platte (2) verschiebbaren Innenwänden (7) zu den voneinander weg gerichteten Enden (5") hin zunächst über eine kurze Strecke in einem Abstand (A) parallel zueinander verlaufen, welcher der Dicke (b) der Strom leitenden Platte (2) plus der doppelten Dicke (D) der Seile (1) oder Litzen (16) angepasst ist, bevor die Innenwände (7) trichterförmig auseinander streben.

## Claims

1. Rope and strand connectors for electric pasture fences, consisting of a current-conducting plate (2) with at its edges formed out cut-outs (3/4) adjusted to the cross-section of the ropes (1) or strands (16) and with hoods (5) set on the plates (2) before the cut-outs (3/4) whose passage openings (6) adjusted to the cross-section of the plates (2) are slidable on the current-conducting plate (2) via the cut-outs (3/4), with the clearance (A) of the inner linings (7) between the ends facing each other (5') of the hoods (5) corresponding to the thickness (b) of the current-conducting plate (2) and the inner linings (7) up to the opposing ends (5") running funnel-shaped in opposite directions so as to allow the hoods (5), once the strand ends have been inserted in the cut-outs (3/4), to slide away in opposite directions whereby the ends of the ropes 1 or strands 16 are folded over and pinched by the inner linings (7) of the hoods (5).

2. Rope or strand connectors according to Claim 1, in particular for connecting rounded ropes (1), **characterized by** the keyhole-shaped cut-outs (3) with the narrower sections (9) being directed in opposite directions and with their width being fitted to the thickness (D) of the ropes (1).

3. Rope or strand connectors according to Claim 2, **characterized by** a bottleneck (12) being formed by the edges (11) of the keyholes (3) at the transition from the broader areas (10) to the more narrow areas (9) with the clearance of the bottleneck (I) being slightly smaller than the thickness (D) of the ropes (1).

4. Rope or strand connectors according to Claim 2 or 3, **characterized by** the outer edge (8) at the end of the smaller section (9) being curved so that the fibers of the ropes (1) are spread out like a fan when folded over.

5. Rope or strand connectors according to Claim 1, in particular for connecting flat strands or strips (16), **characterized by** the length and width of the cutouts (4) being adjusted to the cross section of the strands or strips.

6. Rope or strand connectors according to one of the Claims 1 to 5, **characterized by** the fact that the hoods (5) with their inner linings (7), slidable on the current-conducting plate (2) towards the opposing ends (5"), for a short section first run parallel to each other at a distance (A) which matches the thickness (b) of the current-conducting plate (2) plus twice the thickness (D) of the ropes (1) or strands (16) before the inner linings (7) spread out like a funnel.

## Revendications

1. Connecteur de cordes et de tresses pour clôtures électriques, comprenant une plaque conductrice d'électricité (2) avec évidements (3/4) formés dans les zones marginales, adaptés à la section des cordes (1) ou des tresses (16) et des capots (5) disposés sur les plaques (2) devant les évidements (3/4) qui par leurs ouvertures de passage (6) adaptées à la section des plaques (2) sont décalables sur la plaque conductrice d'électricité (2) moyennant les évidements (3/4), et dont le jour (A) des parois internes (7) aux extrémités se faisant face (5') des capots (5) correspond à l'épaisseur (b) de la plaque conductrice d'électricité (2) et les parois internes (7) jusqu'aux extrémités opposées (5") des capots (5) s'écartent en forme d'entonnoir de manière à permettre aux capots (5) après l'introduction des extrémités des tresses dans les évidements (3/4) d'être décalables en s'écartant vers l'extérieur et que les extrémités des cordes 1 ou tresses 16 sont pliées et enserrées par les parois internes (7) des capots (5).

2. Connecteur de cordes ou de tresses selon revendication 1, en particulier pour la connexion de cordes rondes (1), **caractérisé par le fait que** les évidements (3) sont en forme de trous de serrure, les zones plus étroites (9) s'éloignant l'une de l'autre e s'adaptant dans leur largeur à l'épaisseur (D) des cordes (1).

3. Connecteur de cordes ou de tresses selon revendication 2, **caractérisé par le fait que** les bords latéraux (11) des trous de serrure (3) forment à la transition des zones plus larges (10) vers les zones plus étroites (9) un goulot d'étranglement (12), dont le jour (I) est légèrement inférieur à l'épaisseur (D) des cordes (1).

4. Connecteur de cordes ou de tresses selon revendication 2 ou 3, **caractérisé par le fait que** la bordure extérieure (8) au bout de la zone plus étroite (9) est formée en arc de manière à ce que les fibres des cordes (1) s'ouvrent en éventail lors du pliage.

5. Connecteur de cordes ou de tresses selon revendication 1, en particulier pour la connexion de tresses ou de bandes plates (16), **caractérisé par le fait que** les évidements (4) s'adaptent en longueur et largeur à la section des tresses (16).

6. Connecteur de cordes ou de tresses selon une des revendications 1 à 5, **caractérisé par le fait que** les capots (5) avec leurs parois internes (7) décalables sur la plaque conductrice d'électricité (2), vers les extrémités s'opposant l'une et l'autre (5") suivent tout d'abord sur une courte distance à un écart (A) une évolution parallèle, adapté à l'épaisseur (b) de la plaque conductrice d'électricité (2) à laquelle s'ajoute le double de l'épaisseur (D) des cordes (1) ou tresses (16) avant que les parois internes (7) ne s'ouvrent en entonnoir.
